(19) Europäisches Patentamt
European Patent Office
Office européen des brevets

(11) **EP 4 002 785 B1**

(12) **EUROPEAN PATENT SPECIFICATION**

(45) Date of publication and mention
of the grant of the patent:
**09.08.2023 Bulletin 2023/32**

(21) Application number: **21159638.2**

(22) Date of filing: **26.02.2021**

(51) International Patent Classification (IPC):
**H04L 27/14** $^{(2006.01)}$ **H04L 25/03** $^{(2006.01)}$
**H04L 27/10** $^{(2006.01)}$ **H04L 27/16** $^{(2006.01)}$

(52) Cooperative Patent Classification (CPC):
**H04L 27/106; H04L 25/03305; H04L 27/14;**
H04L 27/16

(54) **APPARATUS FOR SIGNAL DETECTION USING GAUSSIAN FREQUENCY SHIFT KEYING TRANSMISSION AND A METHOD USING THE APPARATUS**

VORRICHTUNG ZUR SIGNALDETEKTION UNTER VERWENDUNG VON ÜBERTRAGUNG MIT GAUSS-FREQUENZUMTASTUNG UND VERFAHREN ZUR VERWENDUNG DER VORRICHTUNG

APPAREIL DE DÉTECTION DE SIGNAL À L'AIDE DE LA TRANSMISSION PAR DÉPLACEMENT DE FRÉQUENCE GAUSSIENNE ET PROCÉDÉ UTILISANT L'APPAREIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2020 EP 20208105**

(43) Date of publication of application:
**25.05.2022 Bulletin 2022/21**

(73) Proprietor: **Shenzhen Goodix Technology Co., Ltd. Shenzhen, Guangdong 518045 (CN)**

(72) Inventor: **Bury, Andreas Gerhard**
**01099 Dresden (DE)**

(74) Representative: **Lippert Stachow Patentanwälte Rechtsanwälte Partnerschaft mbB Krenkelstraße 3 01309 Dresden (DE)**

(56) References cited:
**US-A1- 2017 195 150**

- **QURESHI S U H: "ADAPTIVE EQUALIZATION", PROCEEDINGS OF THE IEEE, IEEE. NEW YORK, US, vol. 73, no. 9, 1 September 1985 (1985-09-01), pages 1349-1387, XP000608510, ISSN: 0018-9219**

**Description**

The invention discloses an apparatus for improved signal detection embedded within a receiver configured to receive signal packets sent by a transmitter using Gaussian Frequency Shift Keying, GFSK, the apparatus comprises a signal detection unit being fed with a signal $y(t)$ from a frequency demodulator in the receiver, a frequency offset estimation unit configured to estimate a frequency offset between a local oscillator of the transmitter and a local oscillator of the receiver and a timing estimation unit configured to estimate a time position where an expected signal was detected at the receiver.

The invention also discloses a method for improved signal detection, which is performed by the inventive apparatus.

Frequency shift keying (FSK) is a modulation technique to transmit digital signals via a radio channel. It is related to analog frequency modulation and, like it, is insensitive to interference. Gaussian Frequency Shift Keying is an FSK method with an upstream Gaussian filter. This flattens the steep edges of digital signals, which means that the highfrequency components of the signal are eliminated. As a result, less bandwidth is required for the transmission of the signal. The Gaussian filter has the advantage of reducing sideband power, reducing interference with neighboring channels, but at the cost of increasing inter-symbol interference.

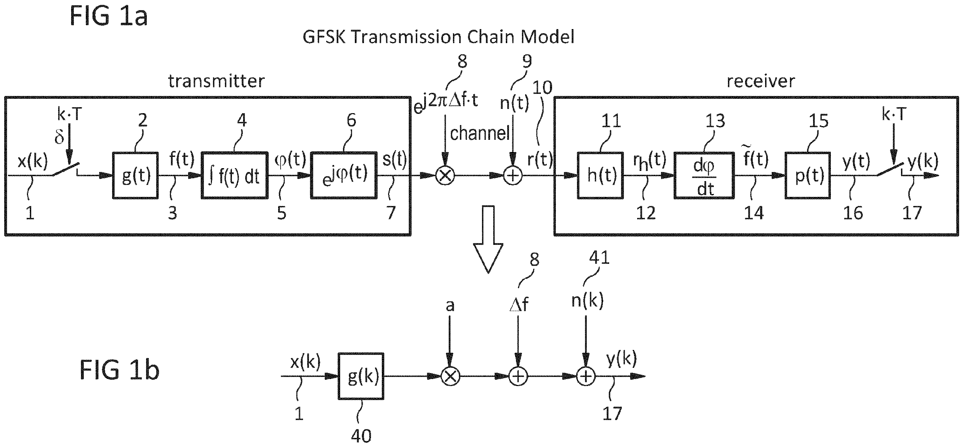

An abstract model of a Gaussian Frequency Shift Keying (GFSK) transmission is shown in figure 1a.

A series of symbols $x(k) \in \{-1,1\}$ 1 is transmitted, another symbol after every $T$ seconds. Transmitted symbols/values {-1,1} correspond to data bit values {0,1}, part of which are expected to be received as a known sequence of bits $b_0...b_{M-1}$. The terms known sequence of bits, known sequence bits and known sequence are used synonymously. The instantaneous-frequency signal $f(t) = \Sigma_k x(k) \cdot g(t - k \cdot T)$ 3 is composed of superimposed weighted and time-shifted impulses, where $g(t)$ 2 is a convolution of a length-T rectangular pulse with a Gaussian pulse. Integration 4 of this instantaneous-frequency signal yields the instantaneous phase $\varphi(t)$ 5 which modulates a rotating exponential 6, i. e., the transmitted signal is $s(t) = e^{-i2\pi \int \Sigma_k x(k) \cdot g(t-k \cdot T)dt}$ 7. A frequency offset $\Delta f$ 8 by $e^{j2\pi \Delta f \cdot t}$ is applied and white Gaussian noise $n(t)$ 9 is added to obtain the received signal $r(t) = s(t) \cdot e^{j2\pi \Delta f \cdot t} + n(t)$ 10. A lowpass filter $h(t)$ 11 removes interference and reduces the noise bandwidth, providing the signal $r_h(t) = r(t)*h(t)$ 12. The frequency demodulator 13 computes the derivative of the phase $\frac{d\varphi}{dt}$ to obtain the estimated instantaneous frequency $\tilde{f}(t) = \frac{d \arg(r_h(t))}{2\pi \cdot dt}$ 14, and the post-filter 15 yields the noise-reduced continuous-time signal $y(t) = \tilde{f}(t) * p(t)$ 16, which is sampled every $T$ seconds to obtain the received symbols $y(k) = y(k \cdot T)$ 17. $y(t)$ is the input signal to the apparatus. It is a signal internal to the receiver (after filtering, frequency demodulation, and another filtering). The transmission chain according to figure 1a includes transmitter, channel, and receiver. r(t) is the received signal. So, $y(t)$ is the frequency demodulator post-filter output, which is fed into the signal detector. A post-filter can be part of a general frequency demodulator.

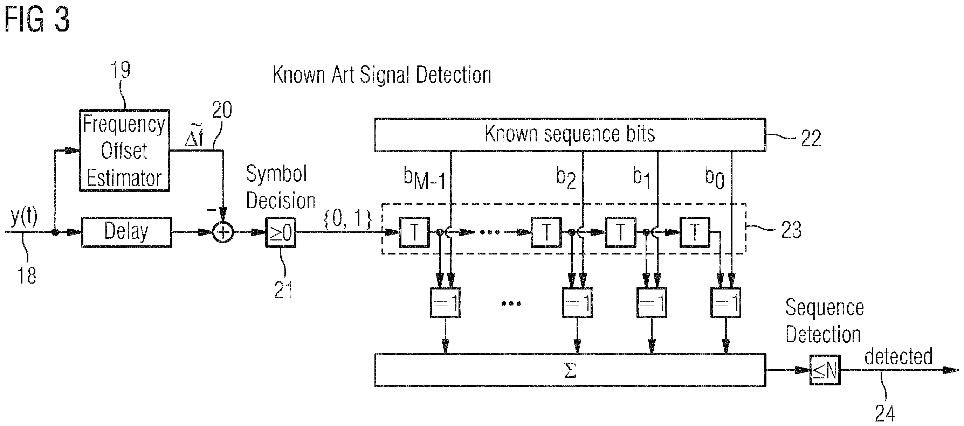

In a Bluetooth and Bluetooth Low Energy modem a Gaussian Frequency Shift Keying (GFSK) modulation is applied. A GSFK receiver first performs non-data-aided frequency offset estimation by a frequency offset estimator and detects the received packet using the given frequency offset estimate by performing sequential symbol-by-symbol decisions before shifting the signal bit-wise in a delay line of bits and checking whether the expected symbol sequence was found. This detection happens at an over-sampled rate, and if the detector finds the expected symbol sequence at multiple successive sample times, the receiver utilizes the middle position of these occasions as the best sample position. As defined in the Bluetooth Standard for the particular transmission scheme, e. g., Bluetooth Basic Rate, a number of at most N ≥ 0 falsely decided symbols may still indicate a detected signal. N identifies the maximum allowed number of falsely decided symbols for a receiver to assume that the transmitted packet was correctly detected. Figure 3 shows schematically the known art signal detection circuit. A perfect match between the transmitted signal and the known sequence bits would be at N=0.

Key parameters driving Bluetooth and Bluetooth Low Energy (see Bluetooth Core Specification Version 5.2, 2019-12-31, Bluetooth Special Interest Group) receiver advancement are low power consumption, high sensitivity and robustness against interference. When operating at the sensitivity limit, retransmissions happen, meaning that higher sensitivity converts again into a power consumption advantage due to less retransmissions.

Reception starts with the detection of a transmitted packet. A transmitted Bluetooth packet begins with a so-called access code. Upon reception of this access code the receiver is entitled to receive the actual payload data. Undetected packets may need to be re-transmitted, causing a penalty in energy consumption. There is a need for highly sensitive and robust packet detection to minimize packet loss. However, inter-symbol interference as well as time or frequency synchronization error, jointly called parameter estimation errors, degrade the performance of the packet detection. US 2017/195150 A1 discloses a Bluetooth signal receiving method and a device using improved symbol timing offset compensation.

So, it is an objective of the present invention to present an apparatus and a method that determines the inter-symbol interference pattern caused by a known transmitted signal portion and cancels it out during packet detection in order to improve the reliability of the symbol decision.

It is also an objective of the present invention to make use of the known, expected, transmitted signal portion to estimate synchronization parameters, i. e., to perform a data-aided joint signal detection and parameter estimation in order to reduce parameter estimation errors that degrade the performance of the packet detection.

The objective of the present invention is solved by an apparatus according to the independent claim 1.

A key idea of this inventive apparatus is to determine a symbol interference pattern caused by a known transmitted signal portion between a transmitter and a receiver and cancel said symbol interference pattern out during packet detection on receiver side, which includes symbol decisions, whereat the interference cancellation improves the reliability of the symbol decisions. A further key idea is to make use of the known, expected, transmitted signal portion to estimate synchronization parameters, i. e., to perform a data-aided joint signal detection and parameter estimation. These estimated parameters include the frequency offset $\tilde{\Delta f_s}$, time offset $\tilde{t_s}$, and a modulation amplitude $\tilde{a_s}$. Because the modulation amplitude seen at the receiver is proportional to the modulation index applied at the transmitter, i. e., the intensity of frequency modulation.

The basis of the apparatus according to the invention is the following considerations:
The abstract model of the Gaussian Frequency Shift Keying (GFSK) transmission shown in figure 1a can be simplified by an idealized equivalent discrete-time model shown in figure 1b. The transfer function is simplified into

$$y(k) = n(k) + \Delta f + a \cdot \sum_{l=-L}^{L} g(l) \cdot x(k - l)$$

where $n(k)$ 41 is a sequence of noise samples, $g(k)$ 40 is the discrete-time impulse response with center-tap $g(0) = 1$ and length $2L+1$, and $a \in [a_0 - \Delta a; a_0 + \Delta a]$, $|\Delta a| \ll |a|$ describes the amplitude of the received modulation according to the GFSK modulation index applied at the transmitter and it varies in a limited range of values; the GFSK modulation index indicates the peak-to-peak deviation or frequency swing at the transmitter, hence the distance between the most distant frequency values, $l$ indicates the index for the convolution for example $L=1$ and $g(l)$ identifies the sampled analog pulses of the transmitted signal. Separating the wanted data symbol from the interference yields

$$y(k) = n(k) + \Delta f + a \cdot x(k) + a \cdot \left( \sum_{l=-L}^{-1} g(l) \cdot x(k - l) + \sum_{l=1}^{L} g(l) \cdot x(k - l) \right)$$

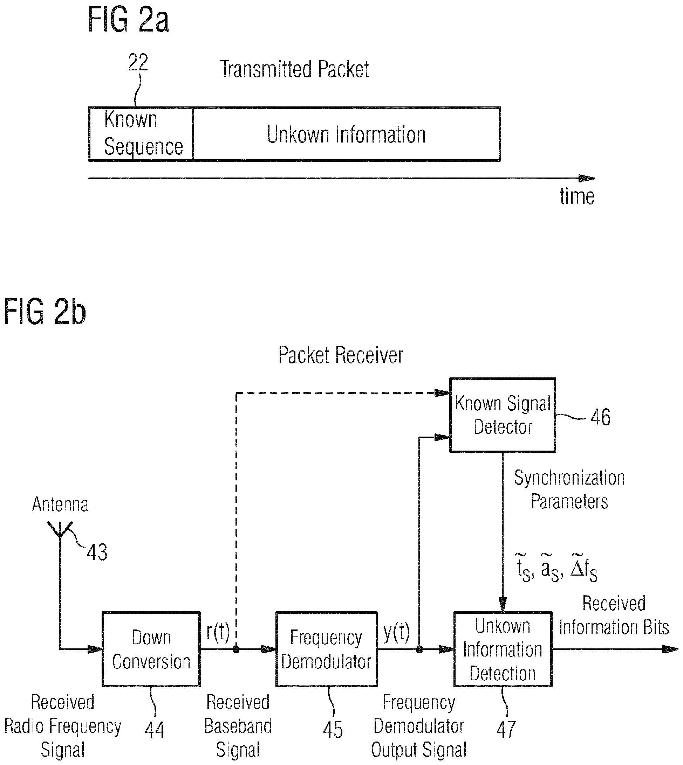

The first term identifies the noise $n(k)$ 41, the second term the frequency offset $\Delta f$ 8, the third term the received data symbol $x(k)$ 1, and the last term identifies interference from neighboring symbols, $x(m \neq k)$. m is an auxiliary index used to indicate all other indices except k. In practice, only a few neighbors will be incorporated. The transmitter sends the payload data embedded in packets, and a packet consists of a sequence known 22 to the receiver followed by unknown information, which is shown in figure 2a. $y(k)$ is used to receive the unknown information of a transmitted packet and only used to show how the discrete-time model is linked with the continuous-time model of figure 1a.

As an example, in Bluetooth (BT) or Bluetooth Low Energy (BLE) the known sequence must be used to determine whether a receiving device is the intended addressee of the sent information. Furthermore, the GFSK modulation index must fall within a limited range of values, which is [0.28; 0.35] for Bluetooth and [0.45; 0.55] for Bluetooth Low Energy. The terms GFSK modulation index and modulation index are used synonymously. The term modulation index describes a property of the transmitted signal.

Figure 2b shows a typical GFSK packet receiver. The antenna 43 receives a radio frequency signal. The down converter 44 transforms the radio frequency signal into a baseband signal. The frequency demodulator 45 delivers an estimated instantaneous frequency as its output signal. The "known signal" detector 46 detects presence of an expected signal and estimates synchronization parameters, based upon the frequency demodulator 45 output signal and, optionally and dependent on the specific implementation, its input signal. The "unknown information" detection unit 47 estimates and decides upon received information bits in the received signal, based upon synchronization parameters obtained from the "known signal" detector 46.

The inventive apparatus differs from known receivers which uses GFSK modulation for signal detection at least in the interference construction unit and a modified signal detection unit. Furthermore, these new means require adaptations to known units of a receiver using GFSK as being claimed in the dependent claims.

In a variant of the inventive apparatus, the interference construction unit comprises inputs of $g(-L) \cdot a_0$ and $g(L) \cdot a_0$

which are used to weight and to calculate the inter-symbol interference terms $c_0...c_{M-1}$ from the known sequence bits $b_0...b_M$ which are mapped to the modulation symbols $x_0...x_M$, whereas $a_0$ is an assumed modulation amplitude value.

The interference construction unit performs a mapping of the known sequence bits $b_0...b_M$ to their symbols {-1;1} resulting in modulation symbols $x_0...x_M$. These modulation symbols $x_0..._{XM}$ are weighted by sample pulses $g(-l)$ and $g(l)$, which are both multiplied by the assumed modulation amplitude value $a_0$. The reason for using a modulation amplitude value here is that the parameter includes receiver properties, specifically the scaling introduced by the filter $p(t)$. The sum of the left and right side of the modulation response results in the inter-symbol interference terms $c_0...c_{M-1}$. These inter-symbol interference terms $c_0...c_{M-1}$ are fed to the signal detection unit. The modulation symbols $x_0...x_{M-1}$ are fed to the signal detection unit as well as to the frequency offset estimation unit.

In a variant of the inventive apparatus, the assumed modulation amplitude value $a_0$ is a mid-value of a modulation amplitude range corresponding to a modulation index range, as the mid value is most representative for the range of possible values.

In another variant of the inventive apparatus, the signal detection unit comprises an input configured to feed the calculated inter-symbol interference terms $c_0...c_{M-1}$, an input configured to feed the modulation symbols $x_0...x_{M-1}$ and an input configured to feed a mean value of the frequency offset $\widetilde{\Delta f}$ calculated by the frequency offset estimation unit.

When receiving the (noisy) expected known sequence bits $b_0...b_M$ inside a packet sent by the transmitter, the received samples are delayed by a delay line of samples, where the amount of inter-symbol interference terms $c_0...c_{M-1}$ caused by the known expected sequence bits $b_0...b_{M-1}$ is subtracted at each tap output. The difference between multiple delayed versions of the continuous time signal $y(t-mT)$, $m=0...M-1$, and the inter-symbol interference terms $c_0...c_{M-1}$ results in difference terms $d_0...d_{M-1}$ representing a received signal travelling through the delay line, which is used together with the estimated frequency offset $\widetilde{\Delta f}$ and the modulation symbols $x_0...x_{M-1}$ to calculated flipped signs of interference-free and frequency-offset-free symbols $u_0...u_{M-1}$ for deciding in parallel for all symbols of the known sequence bits whether the known sequence bits has been detected or not. The use of a delay line of samples allows to subtract the interference terms, which is not possible with a delay line of decided bits, as done in prior art. With interference removed, detection probability increases.

In another further variant of the inventive apparatus, the frequency offset estimation unit comprises an input configured to feed the modulation symbols $x_0...x_{M-1}$ and an input configured to feed difference terms $d_{0...}d_{M-1}$, which present a difference between delayed versions of the continuous time signal, $y(t-mT)$, $T$ being the symbol interval of sent modulation symbols, and the inter-symbol interference terms $c_0...c_{M-1}$ for estimating and outputting a mean value of the frequency offset $\widetilde{\Delta f}$ .

So, after the apparatus has determined the expected noiseless received symbol sequence from the known sequence of bits using the modulation symbols $x_0...x_{M-1}$ and the mid-value $a_0$ of the modulation index range, it subtracts it from the received signal $d_0...d_{M-1}$ travelling through the delay line, and averages the difference in order to obtain the mean value of the frequency offset estimate, $\widetilde{\Delta f}$ , which is needed in the signal detection unit. The difference terms $d_0...d_{M-1}$ presents a difference between delayed versions of the continuous time signal, $y(t-mT)$, and the inter-symbol interference terms $c_0...c_{M-1}$, with the delay line tap index m ranging from 0 to M-1.

According to a variant of the inventive apparatus, the modulation amplitude estimation unit comprises an input configured to feed interference-free and frequency-offset-free symbols $u_0...u_{M-1}$ multiplied by constant-modulus values of the modulation symbols $x_0...x_{M-1}$ belonging to the known sequence bits $b_0...b_M$ for estimating a mean value of the modulation amplitude $\tilde{a}(t)$.

The modulation amplitude $\tilde{a}(t)$ is estimated by flipping the signs of interference-free and frequency-offset-free symbols according to the modulation symbols $x_0\cdots x_{M-1}$ belonging to the known sequence and then averaging the result, $u_0\cdots u_{M-1}$. The interference-free and frequency-offset-free symbols $u_0...u_{M-1}$ are fed to the modulation amplitude estimation unit after calculated in the signal detection unit.

According to another variant of the inventive apparatus, the timing estimation unit comprises inputs configured to feed the estimated modulation amplitude $\tilde{a}(t)$, the frequency offset $\widetilde{\Delta f}$ and the detected known sequence/detection indication by the signal detection unit, and further comprises outputs configured to deliver estimations of the frequency offset $\Delta \tilde{f}_s$, the time offset $\widetilde{t_s}$ , and the modulation amplitude $\widetilde{a_s}$ as synchronization parameters.

The receiver obtains a timing estimate $\tilde{a}_s$ by determining among the time positions where the known sequence was detected the particular time position $\tilde{t}_s$, which yields the largest modulation amplitude. It also samples the time-varying frequency offset estimate at this time position to deliver an initial frequency offset estimate $\Delta\tilde{f}_s$, all of these estimates being used in subsequent demodulation of the unknown data.

The inventive apparatus can be preferably used within a Bluetooth (BT) receiver or a Bluetooth Low Energy (BLE) receiver. Bluetooth and Bluetooth Low Energy utilize a known signal portion as an access code. This is different from a correlation sequence in the requirement to detect all (or most) symbols of the access code correctly in order to assume to be the addressee of a packet. In contrast, the purpose of a correlation sequence is only to synchronize. The objective of the present invention is also solved by a method for improved signal detection within a receiver according to independent claim 9.

The method is performed by the apparatus according to the apparatus claims.

In a variant of the inventive method, the synchronization parameters are determined where the modulation amplitude becomes maximal, i. e., where the best similarity of the received signal to the expected known signal is found. The expected known signal is equal to the known sequence of bits, as the signal is derived from the sequence, or in other words, the transmitter converts the sequence into a continuous signal.

Benefits of the invention are high sensitivity of packet detection as well as accurate parameter estimation. In addition, the robustness in interference scenarios, such as co-channel interference and adjacent channel interference is better than state-of-the-art.

The invention will be explained in more detail using exemplary embodiments.

The appended drawings show

Fig. 1      a) GFSK Transmission Chain Model (prior art),
             b) simplified GFSK Model (according to the invention);

Fig. 2      a) Transmitted packet (prior art); b) Packet receiver (prior art);

Fig. 3      Signal Detection (prior art);

Fig. 4      Apparatus for signal detection according to the invention;

Fig. 5      Interference construction unit;

Fig. 6      Signal detection unit;

Fig. 7      Frequency offset estimation unit;

Fig. 8      Modulation amplitude estimation unit;

Fig. 9      Timing estimation unit.

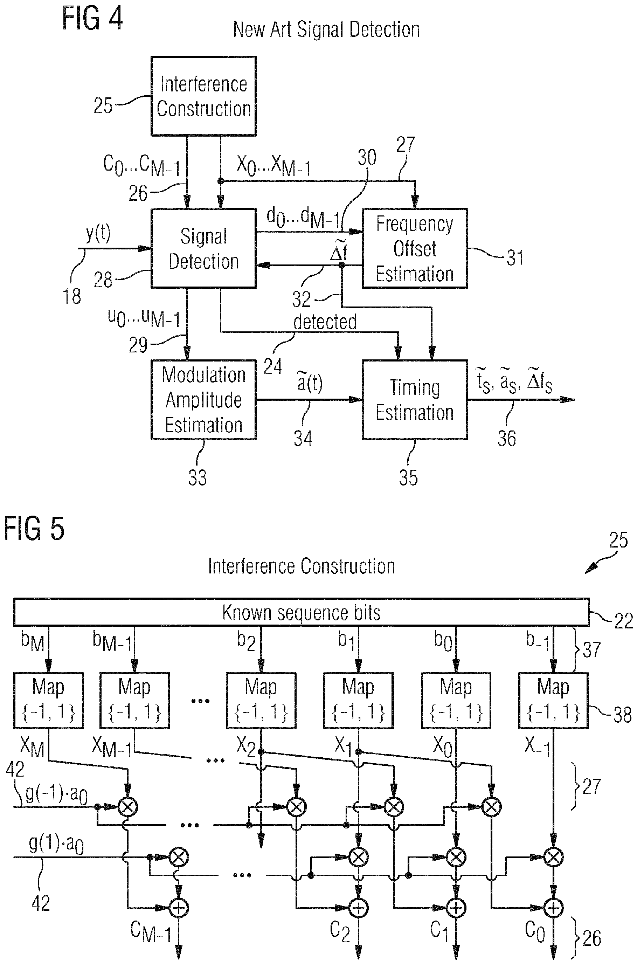

Figure 4 illustrates schematically the inventive apparatus for an improved signal detection within a receiver using Gaussian Frequency Shift Keying (GFSK). The apparatus comprises a signal detection unit 28 which is fed with a signal $y(t)$ from the frequency demodulation in the receiver. Furthermore, it comprises an interference construction unit 25, a frequency offset estimation unit 31 configured to estimate a frequency offset $\Delta f$ between a local oscillator of the transmitter and a local oscillator of the receiver, a timing estimation unit 35 configured to estimate a time position where an expected signal was detected at the receiver and a modulation amplitude estimation unit 33. The interference construction unit 25 transfers estimated inter-symbol interference terms $c_0...c_{M-1}$ 26 and known modulation symbols $x_0...x_{M-1}$ 27 to the signal detection unit 28. It also transfers the modulation symbols $x_0...x_{M-1}$ 27 to the frequency offset estimation unit 31, which estimates a mean value of the frequency offset $\widetilde{\Delta f}$ 32 between the transmitted and received signal. The mean value of the frequency offset $\widetilde{\Delta f}$ 32 is fed to the signal detection unit 28. The signal detection unit 28 outputs difference terms $d_0...d_{M-1}$ 30), which present a difference between a delayed continuous time signal $y(t)$ and inter-symbol interference terms $c_0...c_{M-1}$ 26 for estimating the frequency offset $\widetilde{\Delta f}$ 30) in the frequency offset estimation unit 31. The signal detection unit 28 further outputs interference-free and frequency-offset-free symbols $u_0...u_{M-1}$ 29 and the detected sequence 24. The symbols $u_0...u_{M-1}$ 29 are transferred to the modulation amplitude estimation unit 33 for estimation the mean value of the modulation amplitude $\tilde{a}(t)$ 34. The detected sequence as well as the mean value of

the modulation amplitude $\tilde{a}(t)$ 34 and the frequency offset $\widetilde{\Delta f}$ 32 from the frequency offset estimation unit 31 are transferred to the timing estimation unit 35 for estimation of the synchronization parameters 36: the frequency offset $\Delta \tilde{f}_s$, the time offset $\widetilde{t}_s$ and the modulation amplitude $\widetilde{a_s}$. The synchronization parameters 36 may be utilized to optimize the process in subsequent demodulation of the unknown data as well.

Figure 5 shows a detailed view of the interference construction unit 25. The known expected sequence of bits 22, 37 is mapped 38 to corresponding symbols {-1,1}, which presents modulation symbols $x_0...x_M$ 27. M is a natural number, with M $\geq$ 0 and presents the length of the known sequence. These modulation symbols are weighted by sample pulses $g(-l)$ and $g(l)$ 42, whereas the sample pulses 42 are both multiplied by the mid-value $a_0$ of the modulation index range. For example, for calculation $c_1$ the weighted modulation symbols $x_0$ and $x_2$ are needed. The sum of the left and right side of the modulation response results in the inter-symbol interference terms $c_0...c_{M-1}$ 26. These inter-symbol interference terms $c_0...c_{M-1}$ 26 are fed to the signal detection unit 28.

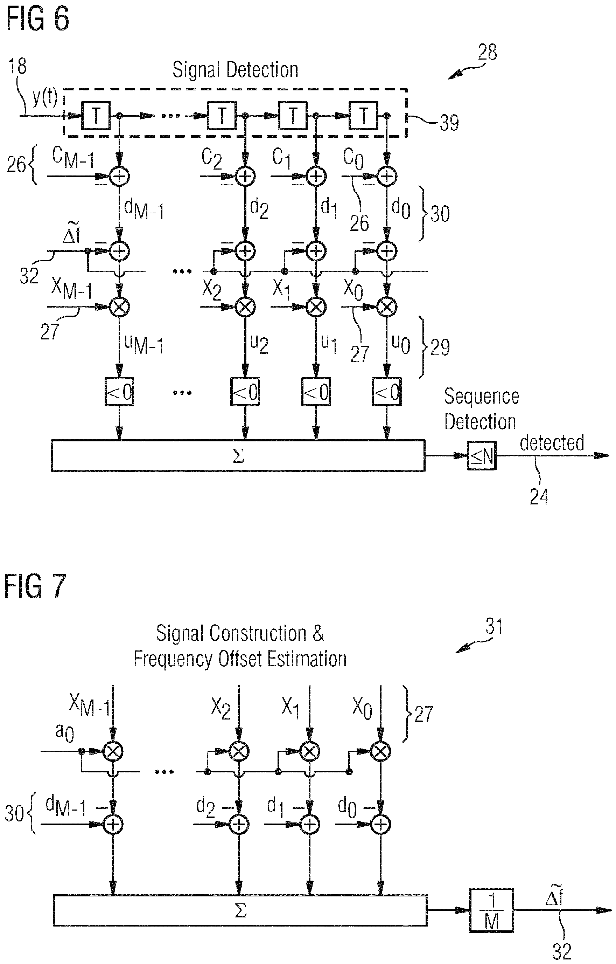

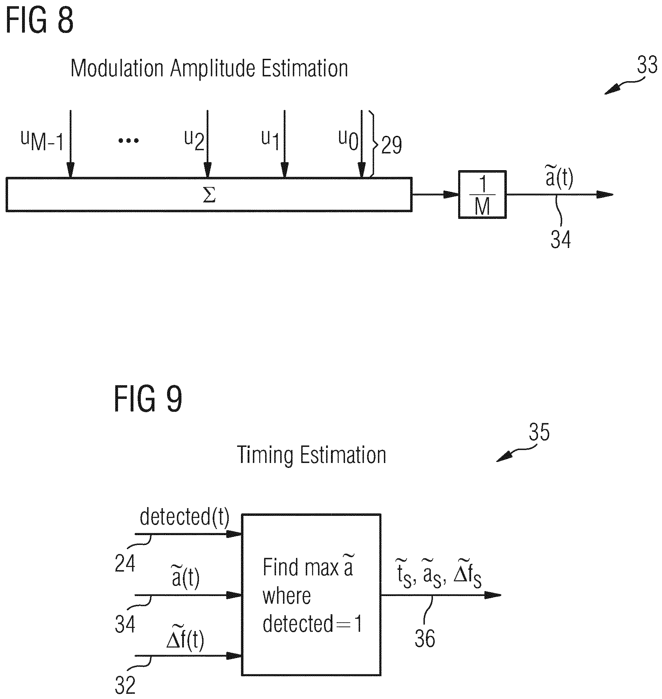

Figure 6 shows the signal detection unit 28, which is fed with a continuous time signal $y(t)$ from the frequency demodulator in the receiver, which is delayed by a delay line of samples 39. Continuous symbols are delayed by T, 2T, 3T, ..., (M-1)T. The amount of inter-symbol interference $c_0...c_{M-1}$ 26 caused by the known expected sequence $b_0...b_{M-1}$ 37 is subtracted at each tap output/bit-to-symbol mapping 38, assuming $L=1$ in figure 5. This yields in the a difference 30 between the delayed continuous time signal $y(t)$ and the inter-symbol interference terms $c_0...c_{M-1}$ 26 from which a mean value of the frequency offset $\widetilde{\Delta f}$ 32 is further subtracted. The result is weighted by the modulation symbols $x_0...x_{M-1}$ 27, resulting in flipped signs of interference-free and frequency-offset-free symbols $u_0...u_{M-1}$ 29. Comparing these symbols with zero performs hard decision on the symbols and indicates the position of mismatches against the known sequence. If the sum of the mismatches is smaller or equal than a pre-defined maximum number $N$ of falsely decided symbols, then the received sequence is detected 24 to be correct. The flipped signs of interference-free and frequency-offset-free symbols $u_0...u_{M-1}$ 29 are transferred to the modulation amplitude estimation unit 33 shown in figure 8.

Figure 7 shows the frequency offset estimation unit 31. It receives the modulation symbols $x_0...x_{M-1}$ 27 from the interference construction unit 25, which are weighted by the mid-value $a_0$ of the modulation index range. The result is subtracted from the difference terms $d_0...d_{M-1}$ 30, which corresponds to the received signal travelling through the delay line of samples 39 respectively. These differences are averaged in order to obtain the mean value of the frequency-offset estimate, $\widetilde{\Delta f}$ 32. This mean value of the frequency offset $\widetilde{\Delta f}$ 32 is transferred to the signal detection unit 28.

Figure 8 shows the modulation amplitude estimation unit 33. It uses the interference-free, frequency-offset-free, and sign-flipped symbols $u_0...u_{M-1}$ 29 to calculate or to estimate a mean value of the modulation amplitude $\tilde{a}(t)$ 34. The modulation amplitude $\tilde{a}(t)$ 25 is transferred to the timing estimation unit 35 shown in figure 9.

The timing estimation unit 35 in figure 9 is used to output estimations of the frequency offset $\Delta \tilde{f}_s$, the time offset $\widetilde{t}_s$, and the modulation amplitude $\widetilde{a_s}$ as synchronization parameters 36. The receiver obtains a timing estimate $\tilde{a}_s$ by determining among the time positions where the known sequence was detected 24 the particular time position $\tilde{t}_s$, which yields the largest modulation amplitude. It also samples the time-varying frequency offset estimate at this time position to deliver an initial frequency offset estimate $\Delta \tilde{f}_s$, all of these estimates being used in subsequent demodulation of the unknown data.

In a practical implementation the continuous-time description above is replaced by processing at discrete time steps with oversampling relative to the symbol rate $1/T$.

Alternative implementations of the present inventive apparatus may use only a subset of the included estimators, by utilizing estimates from alternative estimator structures. For example, if another frequency-offset estimator is available, one may discard the related functionality in above described apparatus. One may also omit timing estimation related functionality if another means for this is available. One may drop modulation amplitude and timing estimation functionality if other means for both are available, or if the receiver does not make use of amplitude estimation while means for timing estimation are already available.

Parameters may be different compared to the illustration above, in particular there may be L > 1.

**EP 4 002 785 B1**

**Apparatus for Signal detection using Gaussian Frequency Shift Keying transmission and a method using the apparatus**

**List of Reference Signs**

1    Transmitted series of symbols
2    Convolution pulse
3    Instantaneous frequency signal
4    Integration
5    Instantaneous phase
6    Modulation of the transmitted signal
7    Transmitted signal
8    Frequency offset between transmitter and receiver
9    White Gaussian noise
10    Received signal
11    Lowpass filter
12    Signal with removed interference and reduced noise
13    Frequency demodulator
14    Estimated instantaneous frequency
15    Post-filter
16    Noise-reduced continuous-time signal
17    Received symbols
18    Continuous-time signal
19    Frequency offset estimator
20    Frequency offset estimate
21    Symbol-by-symbol decision
22    Known sequence of bits
23    Delay-line of bits
24    "Sequence detected" indication
25    Interference construction unit
26    Estimated interference sequence $c_0...c_{M-1}$
27    Known symbol sequence $x_0...x_{M-1}$
28    Signal detection unit
29    Sequence of sign-flipped estimated symbols $u_0...u_{M-1}$
30    Interference-removed symbol sequence $d_0...d_{M-1}$
31    frequency offset estimation unit
32    Estimated frequency offset $\widetilde{\Delta f}$
33    Modulation amplitude estimation unit
34    Estimated modulation amplitude $\tilde{a}(t)$
35    Timing estimation unit
36    Estimated synchronization parameters
37    Known sequence bits $b_0...b_M$
38    Bit-to-symbol mapping
39    Delay-line of signals
40    Discrete-time impulse response
41    Sequence of noise samples
42    Interference terms of equivalent discrete-time impulse response
43    Antenna
44    Down converter
45    frequency demodulator
46    known signal detector
47    unknown information detection unit

**Claims**

1. An apparatus embedded within a receiver configured to receive signal packets each comprising known sequence bits and unknown information data sent by a transmitter using Gaussian Frequency Shift Keying, GFSK, the apparatus comprises a signal detection unit (28) configured to detect presence of the known sequence bits in a received signal packet, the signal detection unit (28) is being fed with the received signal packet $y(t)$ from a frequency demodulator of the receiver, the apparatus further comprises a frequency offset estimation unit (31) configured to estimate a frequency offset $\widetilde{\Delta f}$ between a local oscillator of the transmitter and a local oscillator of the receiver and a timing estimation unit (35) configured to estimate a time position where an expected known signal portion of the received signal packet was detected at the receiver, wherein the expected known signal portion equals the known sequence of bits, **characterized in, that** the apparatus further comprises an interference construction unit (25) configured to calculate modulation symbols $x_0...x_{M-1}$ (27) out of the known sequence bits $b_0...b_{M-1}$ (37) and to construct inter-symbol interference terms $c_0...c_{M-1}$ (26) with $M \geq 0$ presenting the length of the known sequence, whereas the interference construction unit (25) is connected to the signal detection unit (28) and the frequency offset estimation unit (31) for inputting the inter-symbol interference terms $c_0...c_{M-1}$ (26) to the signal detection unit (28) and the modulation symbols $x_0...x_{M-1}$ (27) to the signal detection unit (28) and the frequency offset estimation unit (31), whereas outputs of the frequency offset estimation unit (31) are connected to the signal detection unit (28) and the timing estimation unit (35), and outputs of the signal detection unit (28) are connected to the frequency offset estimation unit (31), the timing estimation unit (35) and a modulation amplitude estimation unit (33) which is also comprised by the apparatus, the timing estimation unit (35) is further configured for outputting estimations of the frequency offset, a time offset corresponding to the estimated time position and a modulation amplitude from the modulation amplitude estimation unit as synchronization parameters (36) to be used for subsequent demodulation of the unknown information data.

2. The apparatus according to claim 1, **characterized in, that** the interference construction unit (25) comprises inputs (42) of $g(-L) \cdot a_0$ and $g(L) \cdot a_0$ which are used to weight and calculate the inter-symbol interference terms $c_0...c_{M-1}$ (26) with the known sequence bits $b_0...b_{M-1}$ (37) mapped to the modulation symbols $x_0...x_{M-1}$ (27), whereas $a_0$ is an assumed modulation amplitude value.

3. The apparatus according to claim 2, **characterized in, that** the assumed modulation amplitude value $a_0$ is a mid-value of a modulation amplitude range corresponding to a modulation index range.

4. The apparatus according to claim 1, **characterized in, that** the signal detection unit (28) comprises an input configured to feed the calculated inter-symbol interference terms $c_0...c_{M-1}$ (26), an input configured to feed the modulation symbols $x_0...x_{M-1}$ (27) and an input configured to feed the frequency offset $\widetilde{\Delta f}$ (32) calculated by the frequency offset estimation unit (31).

5. The apparatus according to claim 1, **characterized in, that** the frequency offset estimation unit (31) comprises an input configured to feed the modulation symbols $x_0...x_{M-1}$ (27) and an input configured to feed difference terms $d_0...d_{M-1}$ (30), which present a difference between delayed versions of a continuous time signal, $y(t-mT)$, $T$ being a symbol interval of modulated symbols of the received signal packet, and the inter-symbol interference terms $c_0...c_{M-1}$ (26) for estimating and outputting the frequency offset $\widetilde{\Delta f}$ (32), which is calculated as a mean of multiple single-symbol frequency offset estimates.

6. The apparatus according to claim 5, **characterized in, that** the modulation amplitude estimation unit (33) comprises an input configured to feed interference-free, frequency-offset-free, and sign-flipped symbols $u_0...u_{M-1}$ (29) for estimating the modulation amplitude $\tilde{a}(t)$ (34) of the received signal packet $y(t)$ as a mean of modulation amplitude estimates of these symbols $u_0...u_{M-1}$, whereas the interference-free, frequency-offset-free, sign-flipped symbols $u_0...u_{M-1}$ (29) are calculated by multiplying the modulation symbols $x_0...x_{M-1}$ (27) with the difference terms $d_0...d_{M-1}$ (30), after subtracting the frequency offset $\widetilde{\Delta f}$ (32).

7. The apparatus according to claim 1, **characterized in, that** the timing estimation unit (35) comprises inputs configured to feed the estimated modulation amplitude $\tilde{a}(t)$ (34), the estimated frequency offset $\widetilde{\Delta f}$ (32) and the detected known sequence of bits by the signal detection unit (28), and further comprises outputs configured to deliver estimations of the frequency offset $\Delta\tilde{f}_s$, the time offset $\widetilde{t}_s$ , and the modulation amplitude $\widetilde{a}_s$ as synchronization parameters (36) .

8. The apparatus according to one of the claims 1 to 7, the apparatus is used within a Bluetooth, BT, receiver or a Bluetooth Low Energy, BLE, receiver.

9. A method for signal detection within a receiver, which is performed by the apparatus according to claims 1 to 8, wherein the method comprising the following steps:

- constructing inter-symbol interferences terms $c_0...c_{M-1}$ (26) of modulation symbols $x_0...x_{M-1}$ (27) out of a known sequence of bits $b_0...b_M$ (37) performed by the interference construction unit (25),
- estimating a frequency offset as a mean of single-symbol frequency offset estimates, where the single-symbol frequency offset estimates are obtained by subtracting the modulation symbols $x_0...x_{M-1}$ (27) weighted by an assumed modulation amplitude $a_0$ from difference terms $d_0...d_{M-1}$ (30), whereas the difference terms are obtained from delayed versions of a received signal packet, $y(t-mT)$, and the inter-symbol interference signal terms $c_0...c_{M-1}$ (26) within the signal detection unit (28),
- detecting presence of the known sequence of bits (37) by the signal detection unit (28) and
- simultaneously estimating a modulation amplitude $\tilde{a}(t)$ (24) by the modulation amplitude estimation unit (33),
- and determining an estimated time position based on the known sequence of bits and outputting estimations of the frequency offset, a time offset corresponding to the estimated time position, and the modulation amplitude as synchronization parameters to be used for subsequent demodulation of unknown information data by the timing estimation unit (35).

10. The method according to claim 9, **characterized in, that** the synchronization parameters (36) are determined where the modulation amplitude becomes maximal.

**Patentansprüche**

1. Vorrichtung, eingebettet in einen Empfänger, die so konfiguriert ist, dass sie Signalpakete empfängt, von denen jedes bekannte Sequenzbits und unbekannte Informationsdaten umfasst, die von einem Sender unter Verwendung von Gaußscher Frequenzumtastung (GFSK) gesendet werden,

wobei die Vorrichtung eine Signaldetektionseinheit (28) umfasst, die so konfiguriert ist, dass sie das Vorhandensein der bekannten Sequenzbits in einem empfangenen Signalpaket erfasst,
wobei die Signaldetektionseinheit (28) mit dem empfangenen Signalpaket $y(t)$ von einem Frequenzdemodulator des Empfängers gespeist wird,
wobei die Vorrichtung ferner eine Frequenzversatz-Schätzungseinheit (31) umfasst, die konfiguriert ist, um einen Frequenzversatz $\widetilde{\Delta f}$ zwischen einem lokalen Oszillator des Senders und einem lokalen Oszillator des Empfängers abzuschätzen, und eine Timing-Schätzungseinheit (35), die so konfiguriert ist, dass sie eine Zeitposition abschätzt, an der ein erwarteter bekannter Signalanteil des empfangenen Signalpakets am Empfänger erfasst wurde,
wobei der erwartete bekannte Signalanteil gleich der bekannten Bitfolge ist,
**dadurch gekennzeichnet, dass** die Vorrichtung ferner eine Interferenzkonstruktionseinheit (25) umfasst, die konfiguriert ist, um Modulationssymbole $x_0...x_{M-1}$ (27) aus den bekannten Sequenzbits $b_0...b_{M-1}$ (37) zu berechnen und Intersymbol-Interferenzterme $c_0...c_{M-1}$ (26) zu konstruieren, wobei $M \geq 0$ die Länge der bekannten Sequenz darstellt,
wobei die Interferenzkonstruktionseinheit (25) mit der Signaldetektionseinheit (28) und der Frequenzversatz-Schätzungseinheit (31) verbunden ist, um die Intersymbol-Interferenzterme $c_0...c_{M-1}$ (26) in die Signaldetektionseinheit (28) und die Modulationssymbole $x_0...x_{M-1}$ (27) in die Signaldetektionseinheit (28) und die Frequenzversatz-Schätzungseinheit (31) einzugeben,
wobei Ausgänge der Frequenzversatz-Schätzungseinheit (31) mit der Signaldetektionseinheit (28) und der Timing-Schätzungseinheit (35) verbunden sind und Ausgänge der Signaldetektionseinheit (28) mit der Frequenzversatz-Schätzungseinheit (31), der Timing-Schätzungseinheit (35) und einer Modulationsamplituden-Schätzungseinheit (33) verbunden sind, die ebenfalls in der Vorrichtung enthalten ist,

wobei die Timing-Schätzungseinheit (35) ferner dazu konfiguriert ist, Schätzungen des Frequenzversatzes, eines Zeitversatzes, der der geschätzten Zeitposition entspricht, und einer Modulationsamplitude von der Modulationsamplituden-Schätzungseinheit als Synchronisationsparameter (36) auszugeben, die für eine nachfolgende Demodulation der unbekannten Informationsdaten zu verwenden sind.

2. Vorrichtung nach Anspruch 1,
**dadurch gekennzeichnet, dass** die Interferenzkonstruktionseinheit (25) Eingänge (42) von $g(-L)$ $a_0$ und $g(L)$ $a_0$ umfasst, die verwendet werden, um die Intersymbol-Interferenzterme $c_0...c_{M-1}$ (26) mit den bekannten Sequenzbits $b_0...b_{M-1}$ (37), die den Modulationssymbolen (27) zugeordnet sind, zu gewichten und zu berechnen, während $a_0$ ein angenommener Modulationsamplitudenwert ist.

3. Vorrichtung nach Anspruch 2,
**dadurch gekennzeichnet, dass** der angenommene Modulationsamplitudenwert $a_0$ ein Mittelwert eines Modulationsamplitudenbereichs ist, der einem Modulationsindexbereich entspricht.

4. Vorrichtung nach Anspruch 1,
**dadurch gekennzeichnet, dass** die Signaldetektionseinheit (28) einen Eingang umfasst, der so konfiguriert ist, dass er die berechneten Intersymbol-Interferenzterme $c_0...c_{M-1}$ (26) einspeist, einen Eingang, der so konfiguriert ist, dass er die Modulationssymbole $x_0...x_{M-1}$ (27) einspeist, und einen Eingang, der so konfiguriert ist, dass er den von der Frequenzversatz-Schätzungseinheit (31) berechneten Frequenzversatz $\widetilde{\Delta f}$ (32) einspeist.

5. Vorrichtung nach Anspruch 1,
**dadurch gekennzeichnet, dass** die Frequenzversatz-Schätzungseinheit (31) einen Eingang umfasst, der so konfiguriert ist, dass er die Modulationssymbole $x_0...x_{M-1}$ (27) einspeist, und einen Eingang, der so konfiguriert ist, dass er Differenzterme $d_0...d_{M-1}$ (30) einspeist, die eine Differenz zwischen verzögerten Versionen eines zeitkontinuierlichen Signals $y(t-mT)$ darstellen, wobei T ein Symbolintervall von modulierten Symbolen des empfangenen Signalpakets ist, und die Intersymbol-Interferenzterme $c_0...c_{M-1}$ (26) zum Schätzen und Ausgeben des Frequenzversatzes $\widetilde{\Delta f}$ (32), der als Mittelwert aus mehreren Einzelsymbol-Frequenzversatzschätzungen berechnet wird.

6. Vorrichtung nach Anspruch 5,

**dadurch gekennzeichnet, dass** die Modulationsamplituden-Schätzungseinheit (33) einen Eingang umfasst, der so konfiguriert ist, dass er interferenzfreie, frequenzversatzfreie und vorzeichenumgekehrte Symbole $u_0...u_{M-1}$ (29) zum Schätzen der Modulationsamplitude $\tilde{\alpha}(t)$ (34) des empfangenen Signalpakets $y(t)$ als ein Mittelwert von Modulationsamplitudenschätzungen dieser Symbole $u_0...u_{M-1}$ einspeist, während die störungsfreien, frequenzversatzfreien, vorzeichenumgekehrten Symbole $u_0...u_{M-1}$ (29) durch Multiplikation der Modulationssymbole $x_0...x_{M-1}$ (27) mit den Differenztermen $d_0...d_{M-1}$ (30), nach Abzug des Frequenzversatzes $\widetilde{\Delta f}$ (32) berechnet werden.

7. Vorrichtung nach Anspruch 1,
**dadurch gekennzeichnet, dass** die Timing-Schätzungseinheit (35) Eingänge umfasst, die so konfiguriert sind, dass sie die geschätzte Modulationsamplitude $\tilde{\alpha}(t)$ (34), den geschätzten Frequenzversatz $\widetilde{\Delta f}$ (32) und die von der Signaldetektionseinheit (28) detektierte bekannte Bitfolge zuführen, und ferner Ausgänge aufweist, die so konfiguriert sind, dass sie Schätzungen des Frequenzversatzes $\Delta \tilde{f}_s$, des Zeitversatzes $\widetilde{t}_s$ und der Modulationsamplitude $\widetilde{\alpha_s}$ als Synchronisationsparameter (36) liefern.

8. Vorrichtung nach einem der Ansprüche 1 bis 7, wobei die Vorrichtung in einem Bluetooth-(BT)-Empfänger oder einem Bluetooth Low Energy-(BLE)-Empfänger verwendet wird.

9.  Verfahren zur Signaldetektion in einem Empfänger, das von der Vorrichtung nach einem der Ansprüche 1 bis 8 durchgeführt wird, wobei das Verfahren die folgenden Schritte umfasst:

- Konstruieren von Intersymbol-Interferenztermen $c_0...c_{M-1}$ (26) von Modulationssymbolen $x_0...x_{M-1}$ (27) aus einer bekannten Folge von Bits $b_0...b_M$ (37), die von der Interferenzkonstruktionseinheit (25) ausgeführt wird,
- Schätzen eines Frequenzversatzes als Mittelwert von Einzelsymbol-Frequenzversatzschätzungen, wobei die Einzelsymbol-Frequenzversatzschätzungen durch Subtrahieren der Modulationssymbole $x_0...x_{M-1}$ (27), die mit einer angenommenen Modulationsamplitude $a_0$ gewichtet sind, von Differenztermen $d_0...d_{M-1}$ (30) erhalten werden, wobei die Differenzterme aus verzögerten Versionen eines empfangenen Signalpakets $y(t-mT)$ und den Intersymbol-Interferenzsignaltermen $c_0...c_{M-1}$ (26) innerhalb der Signaldetektionseinheit (28) erhalten werden,
- Erkennen des Vorhandenseins der bekannten Bitfolge (37) durch die Signaldetektionseinheit (28) und
- gleichzeitiges Schätzen einer Modulationsamplitude $\widetilde{\alpha}(t)$ (24) durch die Modulationsamplituden-Schätzungseinheit (33), und
- Bestimmen einer geschätzten Zeitposition auf der Grundlage der bekannten Bitfolge und Ausgeben von Schätzungen des Frequenzversatzes, eines Zeitversatzes, der der geschätzten Zeitposition entspricht, und der Modulationsamplitude als Synchronisationsparameter, die für die nachfolgende Demodulation unbekannter Informationsdaten durch die Timing-Schätzungseinheit (35) zu verwenden sind.

10. Verfahren nach Anspruch 9,
    **dadurch gekennzeichnet, dass** die Synchronisationsparameter (36) dort bestimmt werden, wo die Modulationsamplitude maximal wird.

**Revendications**

1.  Appareil intégré dans un récepteur configuré pour recevoir des paquets de signaux comprenant chacun des bits de séquence connus et des données d'informations inconnues envoyées par un émetteur en utilisant la modulation par déplacement de fréquence gaussienne, GFSK, l'appareil comprend une unité (28) de détection de signal configurée pour détecter la présence du bits de séquence connus dans un paquet de signal reçu,

    l'unité (28) de détection de signal étant alimentée avec le paquet de signal reçu $y(t)$ depuis un démodulateur de fréquence du récepteur, l'appareil comprend en outre une unité (31) d'estimation de décalage de fréquence configurée pour estimer un décalage de fréquence $\widetilde{\Delta f}$ entre un oscillateur local de l'émetteur et un oscillateur local du récepteur et une unité (35) d'estimation de synchronisation configurée pour estimer une position temporelle dans laquelle une partie de signal connue attendue du paquet de signal reçu a été détectée au niveau du récepteur, la partie de signal connue attendue étant égale à la séquence connue de bits,
    **caractérisé en ce que** l'appareil comprend en outre une unité (25) de construction d'interférence configurée pour calculer des symboles de modulation $X_0...X_{M-1}$ (27) à partir des bits de séquence connus $b_0...b_{M-1}$ (37) et pour construire des termes d'interférence inter-symbole $C_0...C_{M-1}$ (26) avec $M \geq 0$ présentant la longueur de la séquence connue, tandis que l'unité (25) de construction d'interférence est connectée à l'unité (28) de détection de signal et à l'unité (31) d'estimation de décalage de fréquence pour entrer les termes d'interférence inter-symboles $C_0...C_{M-1}$ (26) dans l'unité (28) de détection de signal et les symboles de modulation $X_0...X_{M-1}$ (27) dans l'unité (28) de détection de signal et l'unité (31) d'estimation de décalage de fréquence, tandis que des sorties de l'unité (31) d'estimation de décalage de fréquence sont connectées à l'unité (28) de détection de signal et à l'unité (35) d'estimation de synchronisation, et des sorties de l'unité (28) de détection de signal sont connectée à l'unité (31) d'estimation de décalage de fréquence, à l'unité (35) d'estimation de synchronisation et à une unité (33) d'estimation d'amplitude de modulation qui fait également partie de l'appareil, l'unité (35) d'estimation de synchronisation est en outre configurée pour produire des estimations du décalage de fréquence, un décalage temporel correspondant à la position temporelle estimée et une amplitude de modulation provenant de l'unité d'estimation d'amplitude de modulation en tant que paramètres de synchronisation (36) à utiliser pour une démodulation ultérieure des données d'informations inconnues.

2.  Appareil selon la revendication 1, **caractérisé en ce que** l'unité (25) de construction d'interférence comprend des entrées (42) de $g(-L) \cdot a_0$ et $g(L) \cdot a_0$ qui sont utilisées pour pondérer et calculer les termes d'interférence inter-symbole $C_0...C_{M-1}$ (26) avec les bits de séquence connus $b_0...b_{M-1}$, (37) mappés aux symboles de modulation $X_0...X_{M-1}$ (27), alors que $a_0$ est une valeur supposée d'amplitude de modulation.

**3.** Appareil selon la revendication 2, **caractérisé en ce que** la valeur supposée d'amplitude de modulation $a_0$ est une valeur médiane d'une plage d'amplitude de modulation correspondant à une plage d'indice de modulation.

**4.** Appareil selon la revendication 1, **caractérisé en ce que** l'unité (28) de détection de signal comprend une entrée configurée pour alimenter les termes d'interférence inter-symbole calculés $C_0...C_{M-1}$ (26), une entrée configurée pour alimenter les symboles de modulation $X_0...X_{M-1}$ (27) et une entrée configurée pour alimenter le décalage de fréquence $\widetilde{\Delta f}$ (32) calculé par l'unité (31) d'estimation de décalage de fréquence.

**5.** Appareil selon la revendication 1, **caractérisé en ce que** l'unité (31) d'estimation de décalage de fréquence comprend une entrée configurée pour alimenter les symboles de modulation $X_0...X_{M-1}$ (27) et une entrée configurée pour alimenter les termes de différence $d_0...d_{M-1}$ (30), qui présentent une différence entre les versions retardées d'un signal à temps continu, $y(t-mT)$, T étant un intervalle de symboles de symboles modulés du paquet de signal reçu, et les termes d'interférence inter-symboles $C_0...c_{M-1}$ (26) pour estimer et émettre le décalage de fréquence $\widetilde{\Delta f}$ (32), qui est calculé comme une moyenne de plusieurs estimations de décalage de fréquence à symbole unique.

**6.** Appareil selon la revendication 5, **caractérisé en ce que** l'unité (33) d'estimation d'amplitude de modulation comprend une entrée configurée pour fournir des symboles sans interférence, sans décalage de fréquence et à signes inversés $U_0...U_{M-1}$ (29) pour estimer l'amplitude de modulation $\tilde{a}(t)$ (34) du paquet de signal reçu $y(t)$ en tant que moyenne d'estimations d'amplitude de modulation de ces symboles $U_0...U_{M-1}$, tandis que les symboles sans interférence, sans décalage de fréquence, à signes inversés $U_0...U_{M-1}$ (29) sont calculés en multipliant les symboles de modulation $X_0...X_{M-1}$ (27) par les termes de différence $d_0...d_{M-1}$ (30), après soustraction du décalage de fréquence $\widetilde{\Delta f}$ (32).

**7.** Appareil selon la revendication 1, **caractérisé en ce que** l'unité (35) d'estimation de synchronisation comprend des entrées configurées pour fournir l'amplitude de modulation estimée $\tilde{a}(t)$ (34), le décalage de fréquence estimé $\widetilde{\Delta f}$ (32) et la séquence connue détectée de bits par l'unité (28) de détection de signal, et comprend en outre des sorties configurées pour fournir des estimations du décalage de fréquence $\Delta \tilde{f}_s$, du décalage temporel $\widetilde{t_s}$ et de l'amplitude de modulation $\widetilde{a_s}$ en tant que paramètres de synchronisation (36).

**8.** Appareil selon l'une des revendications 1 à 7, l'appareil étant utilisé dans un récepteur Bluetooth, BT, ou un récepteur Bluetooth Low Energy, BLE.

**9.** Procédé de détection de signal dans un récepteur, qui est mis en oeuvre par l'appareil selon les revendications 1 à 8, le procédé comprenant les étapes suivantes :

- la construction de termes d'interférences inter-symboles $C_0...C_{M-1}$ (26) de symboles de modulation $X_0...X_{M-1}$ (27) à partir d'une séquence connue de bits $b_0...b_M$ (37) mise en oeuvre par l'unité (25) de construction d'interférence,
- l'estimation d'un décalage de fréquence comme étant une moyenne d'estimations de décalage de fréquence à symbole unique, les estimations de décalage de fréquence à symbole unique étant obtenues en soustrayant les symboles de modulation $X_0...X_{M-1}$ (27) pondérés par une amplitude de modulation supposée $a_0$ à partir de termes de différence $d_0...d_{M-1}$ (30), tandis que les termes de différence sont obtenus à partir de versions retardées d'un paquet de signaux reçus, $y(t-mT)$, et des termes de signal d'interférence inter-symbole $C_0...C_{M-1}$ (26) dans l'unité (28) de détection de signal,
- la détection de la présence de la séquence connue de bits (37) par l'unité (28) de détection de signal et
- l'estimation simultanément d'une amplitude de modulation $\tilde{a}(t)$ (24) par l'unité (33) d'estimation d'amplitude de modulation,
- et la détermination d'une position temporelle estimée sur la base de la séquence connue de bits et la production d'estimations du décalage de fréquence, un décalage temporel correspondant à la position temporelle estimée, et de l'amplitude de modulation en tant que paramètres de synchronisation à utiliser pour la démodulation ultérieure de données d'informations inconnues par l'unité (35) d'estimation de synchronisation.

10. Procédé selon la revendication 9, **caractérisé en ce que** les paramètres de synchronisation (36) sont déterminés là où l'amplitude de modulation devient maximale.

## FIG 1a

GFSK Transmission Chain Model

FIG 1b

EP 4 002 785 B1

# FIG 2a

22

Transmitted Packet

| Known Sequence | Unkown Information |

time

# FIG 2b

Packet Receiver

Known Signal Detector — 46

Synchronization Parameters

$\widetilde{t}_S, \widetilde{a}_S, \widetilde{\Delta f}_S$

Antenna

$\diagdown$ 43

Received Information Bits

| Down Conversion | r(t) | Frequency Demodulator | y(t) | Unkown Information Detection |

Received Radio Frequency Signal  44

Received Baseband Signal  45

Frequency Demodulator Output Signal  47

# FIG 3

Known Art Signal Detection

## FIG 4

New Art Signal Detection

## FIG 5

Interference Construction

## FIG 6

Signal Detection

## FIG 7

Signal Construction &
Frequency Offset Estimation

# FIG 8

Modulation Amplitude Estimation                                           33

$$u_{M-1} \quad \cdots \quad u_2 \quad u_1 \quad u_0 \Big\} 29$$

$$\Sigma$$

$$\boxed{\dfrac{1}{M}} \quad \widetilde{a}(t)$$

34

# FIG 9

35

Timing Estimation

detected(t)

24

$\widetilde{a}(t)$

34

$\widetilde{\Delta f}(t)$

32

Find max $\widetilde{a}$
where
detected $= 1$

$\widetilde{t}_S, \widetilde{a}_S, \widetilde{\Delta f}_S$

36

**EP 4 002 785 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017195150 A1